(19) Europäisches Patentamt
European Patent Office
Office européen des brevets

(11) Veröffentlichungsnummer: **0 013 682**
**B1**

(12) # EUROPÄISCHE PATENTSCHRIFT

(45) Veröffentlichungstag der Patentschrift: **14.10.81**

(51) Int. Cl.³: **C 07 D 401/14,** C 08 K 5/34 // (C07D401/14, 211/58, 251/70)

(21) Anmeldenummer: **79102300.5**

(22) Anmeldetag: **06.07.79**

(54) **Neue Piperidyl-Triazin-Derivate, Verfahren zu ihrer Herstellung, ihre Verwendung als Stabilisatoren für Polymere und die damit stabilisierten Polymere.**

(30) Priorität: **29.01.79 EP 79100244**
**28.06.79 CH 6065/79**

(43) Veröffentlichungstag der Anmeldung: **06.08.80 Patentblatt 80/16**

(45) Bekanntmachung des Hinweises auf die Patenterteilung: **14.10.81 Patentblatt 81/41**

(84) Benannte Vertragsstaaten: **CH DE FR GB IT**

(56) Entgegenhaltungen:
**FR-A-2 372 187**
**US-A-4 086 204**
**US-A-4 108 829**

(73) Patentinhaber: **CIBA-GEIGY AG, Patentabteilung Postfach, CH-4002 Basel (CH)**

(72) Erfinder: **Rody, Jean, Dr., Rütiring 82, CH-4125 Riehen (CH)**

EP 0 013 682 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Neue Piperidyl-Triazin-Derivate, Verfahren zu ihrer Herstellung, ihre Verwendung als Stabilisatoren für Polymere und die damit stabilisierten Polymere

Die Erfindung betrifft neue Polyalkylpiperidinderivate von s-Triazinen und ihre Verwendung als Stabilisatoren für Polymere.

In der EP-Veröffentlichung Nr. 3 542, welche die Anmeldenummer 79.100 244.7 trägt, werden Polyalkylpiperidinderivate von s-Triazinen als Stabilisatoren für Polymere beansprucht, die den folgenden Formeln (1) und (2) entsprechen.

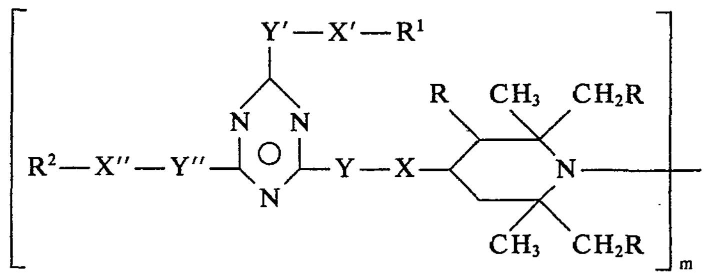

(1)

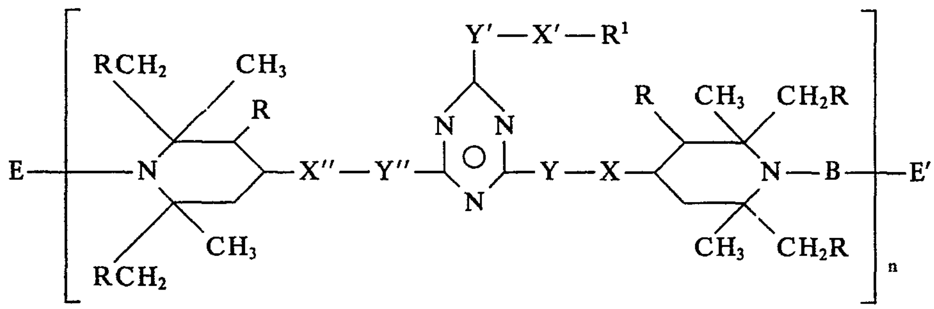

(2)

worin m 2, 3 oder 4 ist, n 2 bis 50 ist, X, X' und X'' eine direkte Bindung, $C_1-C_4$-Alkylen oder $-OCH_2CH_2CH_2-$, dessen O nicht an Y, Y' oder Y'' gebunden ist, darstellen, Y, Y' und Y'' $-O-$, $-S-$, $-NH-$ oder $-NR^3-$ darstellen, $R_1$ Wasserstoff oder $C_1-C_4$-Alkyl bedeutet, $R^1$, $R^2$ und $R^3$ $C_1-C_{18}$-Alkyl, $C_2-C_8$-Alkoxyalkyl, $C_2-C_4$-Hydroxyalkyl, $C_5-C_{12}$-Cycloalkyl, $C_7-C_{12}$-Aralkyl, $C_3-C_{18}$-Alkenyl, $C_6-C_{10}$-Aryl, durch 1 oder 2 $C_1-C_8$-Alkylgruppen und/oder OH und/oder $C_1-C_4$-Alkoxy substituiertes Phenyl oder eine Polyalkylpiperidinylgruppe der Formel (3) darstellt

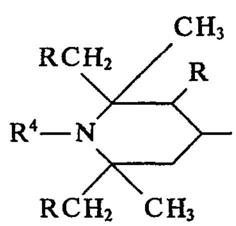

(3)

oder im Falle, daß Y' oder Y'' $-NR^3-$ ist und X' oder X'' eine direkte Bindung ist, $R^1$ und $R^3$ zusammen mit dem N-Atom einen Pyrrolidin-, Piperidin- oder Morpholinring bilden, $R^4$ Wasserstoff, $O^{\cdot}$, $C_1-C_{12}$-Alkyl, Allyl oder Benzyl bedeutet,

A wenn m 2 ist, $C_2-C_{12}$-Alkylen, $C_4-C_8$-Alkenylen, Xylylen oder einen Rest der Formel

$-CH_2-C\equiv C-CH_2-$, 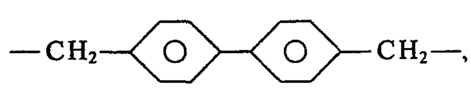,

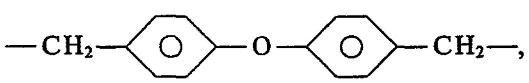, $-CH_2-COO-R^5-OOC-CH_2-$,

$-CH_2-CH(OH)-CH_2$ oder $-CH_2CH(OH)CH_2-D-CH_2CH(OH)CH_2-$

darstellt, wenn m 3 ist, eine Gruppe der Formel

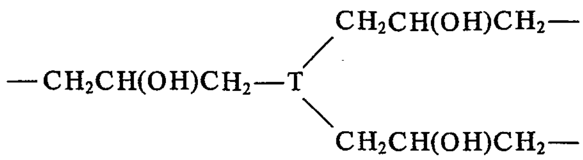

darstellt und,
wenn m 4 ist, eine Gruppe der Formel

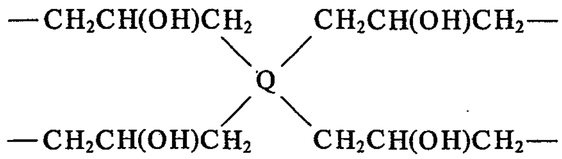

darstellt,

B — $C_2-C_{12}$-Alkylen, $C_4-C_8$-Alkenylen, Xylylen oder einen Rest der Formel

$$-CH_2-COO-R^5-OOC-CH_2-,\quad -CH_2-CH(OH)-CH_2-$$

oder $-CH_2CH(OH)CH_2-D-CH_2CH(OH)CH_2-$

darstellt,

$R^5$ — $C_2-C_8$-Alkylen, $C_4-C_8$-Oxaalkylen oder Cyclohexylen darstellt,

D — einen zweiwertigen Rest der Formel

$$-O-R^6-O-,\quad -O-C(O)-R^7-C(O)-O-,$$

$$-OCH(R^8)CH_2O-R^6-OCH_2CH(R^8)O-$$

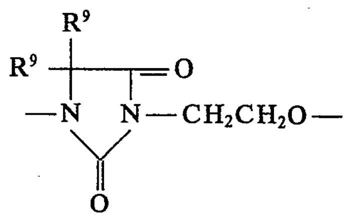

oder

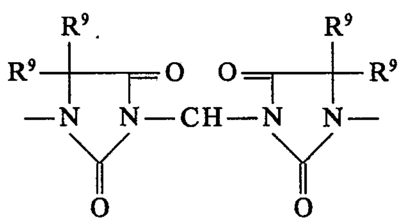

darstellt,

$R^6$ — $C_2-C_{12}$-Alkylen, $C_6-C_{12}$-Cycloalkylen, $C_6-C_{12}$-Arylen oder —Phenylen-Z-Phenylen— darstellt, worin Z $-CH_2-$, $C(CH_3)_2$, $-SO_2-$ oder $-O-$ bedeutet,

$R^7$ — eine direkte Bindung, $C_1-C_{12}$-Alkylen, $C_2-C_6$-Alkenylen, $C_6-C_{12}$-Cycloalkylen oder Cycloalkenylen oder $C_6-C_{12}$-Arylen darstellt,

$R^8$ und $R^9$ — Wasserstoff oder $C_1-C_4$-Alkyl sind,

T — einen dreiwertigen Rest der Formeln

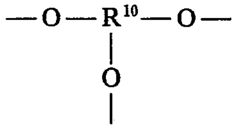

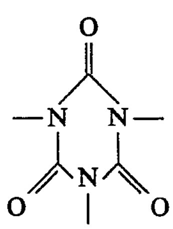

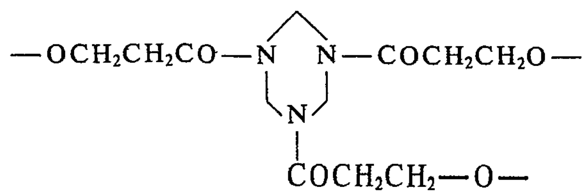

oder

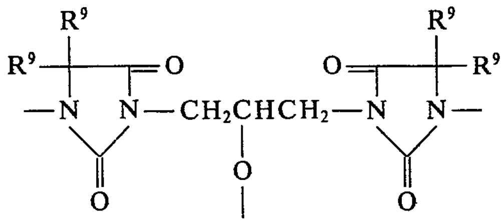

darstellt,

$R^{10}$ ein dreiwertiger aliphatischer Kohlenwasserstoffrest mit 3 – 10 C-Atomen ist,

Q einen vierwertigen Rest der Formel

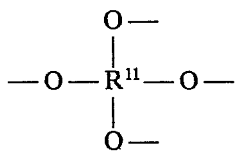

oder

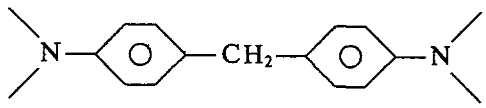

darstellt,

$R^{11}$ einen vierwertigen aliphatischen Kohlenwasserstoffrest mit 4 – 10 C-Atomen bedeutet und

E und E' Endgruppen darstellen.

Diese Verbindungen werden dadurch hergestellt, daß man entweder eine Verbindung der Formel

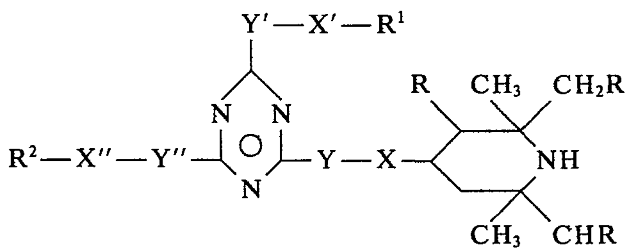

mit einem den Rest A einführenden Dihalogenid oder Di-, Tri- oder Tetraepoxid umsetzt, wobei Verbindungen der Formel (1) erhalten werden, oder eine Verbindung der Formel

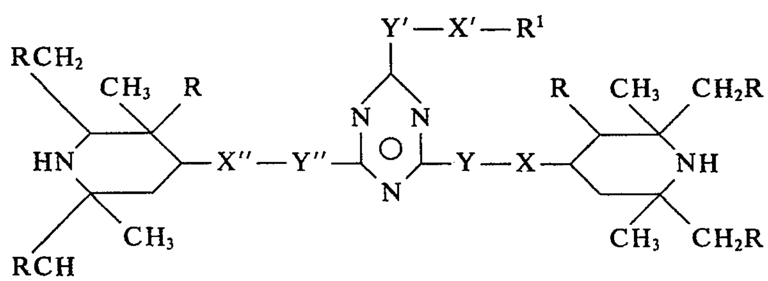

mit einem den Rest B einführenden Dihalogenid oder Diepoxid umsetzt, wobei Verbindungen der Formel (2) erhalten werden.

In Weiterführung dieser Erfindung wurde gefunden, daß man in analoger Weise als Ausgangsmaterial solche Piperidinverbindungen verwenden kann, die zwei Triazinreste enthalten. Die hierbei entstehenden Reaktionsprodukte eignen sich ebenfalls als Stabilisatoren für Polymere, haben aber stark verschiedene physikalische Eigenschaften auf Grund ihrer Struktur. Die Struktur dieser Produkte ist nicht einheitlich, so daß sie nicht durch eine Formel wiedergegeben werden kann.

Die vorliegende Erfindung umfaßt daher ein Verfahren zur Herstellung von neuen Stabilisatoren für Polymere, das dadurch gekennzeichnet ist, daß man eine Verbindung der Formel I

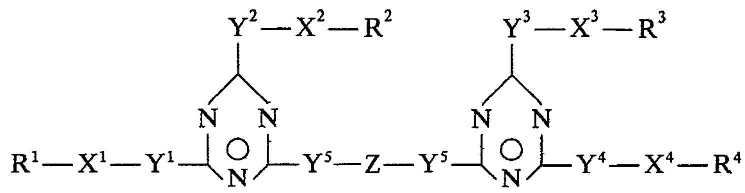

(I)

worin $X^1$, $X^2$, $X^3$ und $X^4$ eine direkte Bindung, $C_1-C_4$-Alkylen oder $-OCH_2CH_2CH_2-$, dessen O nicht an $Y^1$, $Y^2$, $Y^3$ oder $Y^4$ gebunden ist, bedeuten,
$Y^1$, $Y^2$, $Y^3$, $Y^4$ und $Y^5$ $-O-$, $-S-$ oder $-NR^5-$ bedeuten,
Z $C_2-C_{12}$-Alkylen, durch $-O-$, $-S-$ oder $-NR^6-$ unterbrochenes $C_4-C_{12}$-Alkylen, Xylylen, $C_6-C_{12}$-Arylen oder —Phenylen-E-Phenylen— bedeutet, wobei E $-CH_2-$, $C(CH_3)_2$, $-SO_2-$ oder $-O-$ darstellt, und mindestens einer der Reste $R^1$, $R^2$, $R^3$, $R^4$, $R^5$ und $R^6$ eine Polyalkylpiperidylgruppe der Formel II darstellt,

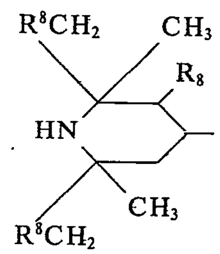

(II)

und die übrigen Reste $R^1$, $R^2$, $R^3$, $R^4$, $R^5$ und $R^6$ Wasserstoff, $C_1-C_{18}$-Alkyl, $C_2-C_8$-Alkoxyalkyl, $C_2-C_4$-Hydroxyalkyl, $C_5-C_{12}$-Cycloalkyl, $C_7-C_{12}$-Aralkyl, $C_3-C_{18}$-Alkenyl, $C_6-C_{10}$-Aryl, durch 1 oder 2 $C_1-C_8$-Alkylgruppen und/oder $C_1-C_4$-Alkoxygruppen und/oder OH substituiertes Phenyl oder eine Polyalkylpiperidylgruppe der Formel II' darstellt,

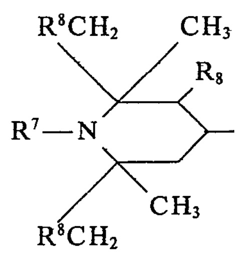

(II')

oder im Falle, daß $Y^1$, $Y^2$, $Y^3$ oder $Y^4$ $-NR^5-$ bedeutet und $X^1$, $X^2$, $X^3$ oder $X^4$ eine direkte Bindung ist, $R^1$, $R^2$, $R^3$ oder $R^4$ zusammen mit $R^5$ und dem N-Atom einen Pyrrolidin-, Piperidin- oder Morpholinring bilden, $R^7$ $O^\bullet$, $C_1-C_{12}$-Alkyl, Allyl oder Benzyl bedeutet und $R^8$ Wasserstoff oder Methyl bedeutet, entweder mit einer Dihalogenverbindung der Formel Hal—A—Hal, worin Hal Cl oder Br bedeutet und A $C_2-C_{12}$-Alkylen, $C_4-C_8$-Alkenylen, Xylylen oder einen Rest der Formel

$-CH_2-C\equiv C-CH_2-$ 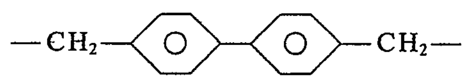

oder

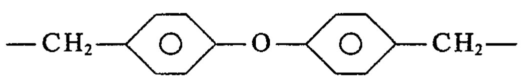

bedeutet umsetzt oder mit einem Diepoxid der Formel III,

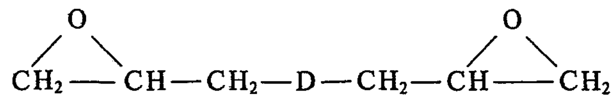 (III)

worin D einen zweiwertigen Rest der Formel

$$—O—R^9—O—, \quad —O—C(O)—R^{10}—C(O)—O—,$$

$$—OCH(R^{11})CH_2O{=}R^9—OCH_2CH(R^{11})O—$$

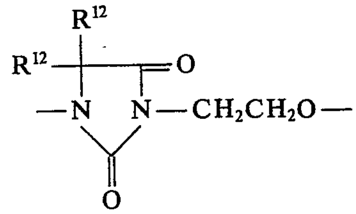

oder

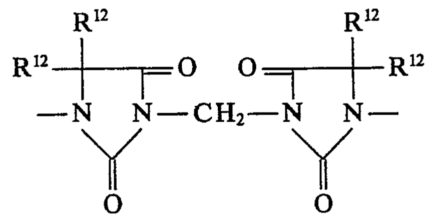

darstellt, worin $R^9$ $C_2-C_{12}$-Alkylen, $C_6-C_{12}$-Cycloalkylen, $C_6-C_{12}$-Arylen oder —Phenylen-E-Phenylen— darstellt, $R^{10}$ eine direkte Bindung, $C_1-C_{12}$-Alkylen, $C_2-C_6$-Alkenylen, $C_6-C_{12}$-Cycloalkylen oder Cycloalkenylen oder $C_6-C_{12}$-Arylen darstellt und $R^{11}$ und $R^{12}$ Wasserstoff oder $C_1-C_4$-Alkyl sind, oder mit Epichlorhydrin umsetzt, oder mit einem Tri-epoxid der Formel IV

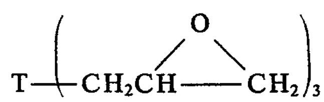 (IV)

umsetzt, worin T einen dreiwertigen Rest der Formeln

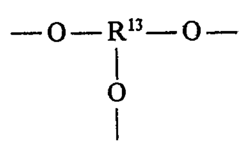 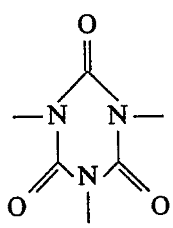

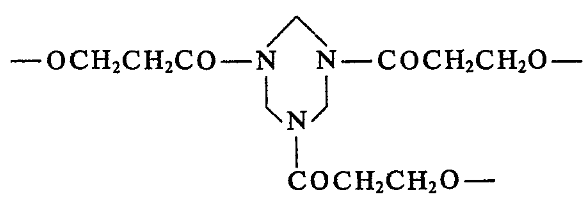

oder

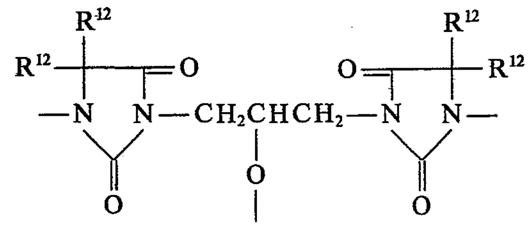

darstellt und
$R^{13}$ ein dreiwertiger aliphatischer Kohlenwasserstoffrest mit 3—10 C-Atomen ist, oder mit einem Tetra-epoxid der Formel V umsetzt,

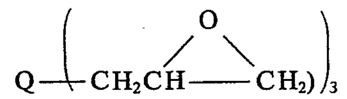
(V)

worin Q einen vierwertigen Rest der Formel

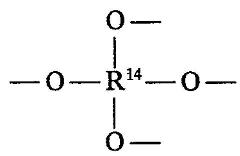

oder

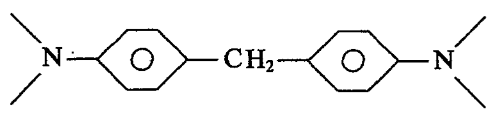

darstellt und
$R^{14}$ einen vierwertigen aliphatischen Kohlenwasserstoffrest mit 4—10 C-Atomen bedeutet.

$R_7$ als $C_1$—$C_{12}$-Alkyl kann ein verzweigter oder unverzweigter Alkylrest sein, z. B. Methyl, Äthyl, Isopropyl, tert.-Butyl, Hexyl, Isooctyl, Decyl oder Dodecyl. $R^1$, $R^2$, $R^3$, $R^4$, $R^5$ und $R^6$ können darüber heraus auch höhere Alkylreste wie z. B. Tetradecyl, Hexadecyl oder Octadecyl darstellen.

$R^1$, $R^2$, $R^3$, $R^4$, $R^5$ und $R^6$ als Alkoxyalkyl können z. B. Methoxymethyl, 2-Methoxyäthyl, 2-Äthoxyäthyl, 2-Isopropoxyäthyl 2-n-, sec.- oder tert.-Butoxyäthyl oder 2-Butoxypropyl sein.

$R^1$, $R^2$, $R^3$, $R^4$, $R^5$ und $R^6$ als Hydroxyalkyl können z. B. 2-Hydroxyäthyl, 2-Hydroxypropvl, 2-Hydroxybutyl oder 3-Hydroxypropyl sein.

$R^1$, $R^2$, $R^3$, $R^4$, $R^5$ und $R^6$ als $C_5$—$C_{12}$-Cycloalkyl können beispielsweise Cyclopentyl, Cyclohexyl, 3-Methylcyclohexyl, 4-tert.-Butylcyclohexyl oder Cyclododecyl sein.

$R^1$, $R^2$, $R^3$, $R^4$, $R^5$ und $R^6$ als $C_6$—$C_{10}$-Aryl können Phenyl oder Naphthyl sein, wobei Phenyl bevorzugt ist.

$R^1$, $R^2$, $R^3$, $R^4$, $R^5$ und $R^6$ als Aralkyl können z. B. Benzyl, Phenyläthyl, Phenylbutyl oder Naphthylmethyl sein.

$R^1$, $R^2$, $R^3$, $R^4$, $R^5$ und $R^6$ als Alkenyl können z. B. Allyl, Methallyl, Hexenyl oder Oleyl sein.

$R^1$, $R^2$, $R^3$, $R^4$, $R^5$ und $R^6$ als substituiertes Phenyl, können z. B. p-Tolyl, 4-Hydroxyphenyl, 4-tert.-Butylphenyl oder 3,5-Di-tert.-butyl-4-hydroxyphenyl sein.

$X^1$, $X^2$, $X^3$ und $X^4$ als $C_1$—$C_4$-Alkylen können beispielsweise Methylen, Äthylen, 1,3-Propylen, 1,2-Propylen, 1,1-Dimethyläthylen oder 2,2-Propylen sein.

A, Z oder $R^9$ als Alkylen kann eine verzweigte oder unverzweigte Alkylengruppe sein, wie z. B. Äthylen, Tri-, Tetra-, Hexa-, Octa-, Deca- oder Dodecamethylen, 2,2-Dimethylpropylen-1,3, 1,2-Butylen oder 1,2-Propylen. $R^5$ ist ein zweiwertiger aliphatischer oder cycloaliphatischer Rest, beispielsweise Äthylen, 1,2-Propylen, 1,2-Butylen, 1,3-Propylen, 1,4-Butylen, 1,6-Hexylen, 1,4-Cyclohexylen oder 3-Oxapentylen-1,5.

Z als durch O, S, NH oder $NR^6$ unterbrochenes Alkylen kann einfach oder mehrfach unterbrochenes Alkylen sein und beispielsweise 3-Oxa-1,5-pentylen, 4-Oxa-1,7-heptylen, 4,7-Dioxa-1,8-octylen, 3-Tetra-1,5-pentylen, 3-Aza-1,5-pentylen, N-Methyl-3-aza-1,5-pentylen, N-Cyclohexyl-4-aza-1,7-heptylen oder 3,6-Diaza-1,8-octylen darstellen.

A als Alkenylen kann z. B. 1,4-Buten-2-ylen oder 1,6-Hexen-3-ylen sein.

$R^9$ als Cycloalkylen kann z. B. 1,4-Cyclohexylen oder 1,4-Cyclooctylen sein.

$R^{10}$ als Alkylen oder Alkenylen kann z. B. Methylen, 1,3-Propylen, Tetramethylen, 2,2-Dimethyl-1,3-propylen, Octamethylen, Dodecamethylen, Vinylen oder 1,4-Buten-2-ylen sein. $R^{10}$ als cyclischer Rest

kann beispielsweise 1,2-Cyclopentylen, 1,2-Cyclohexylen, 1,2-Cyclohexen-4-ylen, 3,6-Endomethylencyclohexen-4-ylen-1,2, 1,2-Phenylen, 1,4-Phenylen, oder 1,4-Naphthylen sein.

Z, $R^9$ und $R^{10}$ als Arylen können Phenylen oder Naphthylen sein, bevorzugt Phenylen.

$R^{13}$ als dreiwertiger aliphatischer Rest kann der Kohlenwasserstoffrest eines Triols sein, beispielsweise der Rest von Glycerin, Trimethyloläthan oder Trimethylolpropan. $R^{14}$ als vierwertiger Rest kann der Kohlenwasserstoffrest eines Tetrols sein, z. B. von Erythrit oder Pentaerythrit.

Bevorzugt ist dabei die Umsetzung von Verbindungen der Formel I, in deren Polyalkylpiperidingruppen der Formel II und II' der Substituent $R^8$ Wasserstoff ist.

Bevorzugt ist weiterhin die Umsetzung solcher Verbindungen der Formel I, worin $Y^1$, $Y^2$, $Y^3$, $Y^4$ und $Y^5$ $-NR^5-$ bedeuten und Z Alkylen ist.

Die als Ausgangsmaterial verwendeten Bis-triazinverbindungen der Formel I können durch stufenweise Kondensation zweier Monochlortriazine mit einem Diol, Dithiol oder Diamin gemäß folgendem Reaktionsschema hergestellt werden:

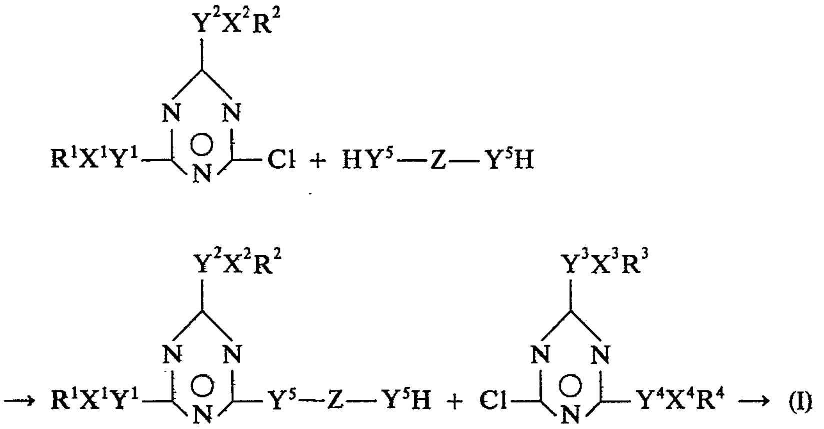

Wenn die Gruppe $R^1X^1Y^1$ – identisch mit $R^4X^4Y^4$ – ist und die Gruppe $R^2X^2Y^2$ – identisch mit $R^3X^3Y^3$ – ist, so sind die beiden Monochlortriazine identisch und die Reaktion kann in einer Stufe durchgeführt werden.

Man kann aber auch durch Reaktion von Dichlortriazinen mit $HY^5-Z-Y^5H$ ein Bis-triazin der Formel

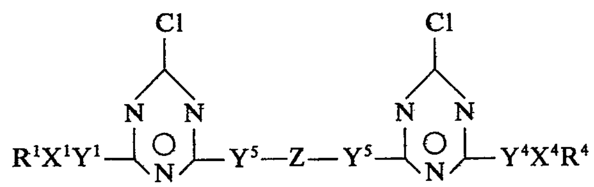

herstellen und dieses mit $R^2X^2Y^2H$ und $R^3X^3Y^3H$ umsetzen.

Als Reaktionspartner für die erfindungsgemäße Umsetzung geeignete Dihalogenide Hal–A–Hal sind beispielsweise 1,4-Dibrombutan, 1,8-Dibromoctan, 1,6-Dichlorhexan, 1,4-Dichlorbuten-2, 1,4-Dichlorbutin, m- oder p-Xylylendichlorid, 4,4'-Di(chlormethyl)-diphenyl, Äthylenglykoldi-(chloracetat) oder Butandiol-1,4-di-(chloracetat).

Geeignete Bisepoxide sind z. B. Butandiol-1,4-diglycidyläther, Diglycidyläther von Bisphenol A, Tetrahydrophthalsäurediglycidylester, Trimethyladipinsäure-diglycidylester, Terepthalsäure-diglycidylester, 1-Glycidyl-3-glycidyloxyäthyl-5,5-dimethyl-hydantoin oder 1,1'-Diglycidyl-3,3'-methylen-bis-5,5-dimethyldantoin.

Geeignete Tris- und Tetraepoxide sind z. B. die Glycidyläther von Trimethylolpropan, von Glycerin oder von Pentaerythrit.

Bei der erfindungsgemäßen Umsetzung reagieren die Halogenatome von Hal–A–Hal oder von Epichlorhydrin sowie die Epoxidgruppen der Verbindungen der Formel III, IV und V oder des Epichlorhydrins mit den sekundären Aminogruppen der Reste der Formel II. Da diese sekundären Aminogruppen sterisch gehindert sind, erfordert die Umsetzung verhältnismäßig intensive Reaktionsbedingungen. Temperaturen von 100–200°C sind bevorzugt sowie die Ausführung in hochsiedenden Lösungsmitteln.

Die Reaktion mit Hal–A–Hal sowie mit Epichlorhydrin wird bevorzugt in Gegenwart von stöchiometrischen Mengen eines Halogenwasserstoff-Akzeptors durchgeführt. Hierfür eignen sich organische oder anorganische Basen wie Alkalihydroxide, Alkalicarbonate, Alkalialkoholate, tertiäre Amine oder basische Heterocyclen. Beispiele hierfür sind NaOH, KOH, $Na_2CO_3$, $Li_2CO_3$, $NaOC_2H_5$, $KOC_4H_9$-tert., Tributylamin, Dimethylamin Pyridin oder 1-Methylpiperidin. Als Lösungsmittel eignen sich vor allem Kohlenwasserstoffe und Chlorkohlenwasserstoffe wie z. B. Toluol, Xylol, Chlorbenzol

oder Dichlorbenzol oder höher-siedende Ketone wie Methyl-äthylketon, oder polare Lösungsmittel wie Dimethylformamid oder Dimethylsulfoxid.

Die Reaktion mit den Epoxidverbindungen wird bevorzugt in polaren Lösungsmitteln durchgeführt wie z. B. Äthylenglykol und dessen Äther, Dimethylformamid oder Tetramethylensulfon. Sie kann aber auch ohne Lösungsmittel ausgeführt werden.

Das Molverhältnis, in dem man die beiden Reaktionskomponenten umsetzt, kann ein stöchiometrisches sein, d. h., daß man pro Gruppe der Formel II eine Halogen- oder Epoxidgruppe verwendet. In diesem Fall setzt man beispielsweise ein Mol einer Verbindung der Formel I, die nur eine Gruppe der Formel II enthält, mit 0,5 Mol eines Dihalogenides, Diepoxides oder Epichlorhydrin oder mit 0,33 Mol eines Triepoxides oder mit 0,25 Mol eines Tetraepoxides um. Oder man setzt ein Mol einer Verbindung der Formel I, die 2 Gruppen der Formel II enthält, mit 1 Mol einer difunktionellen Komponente oder mit 0,66 Mol einer trifunktionellen Komponente oder mit 0,5 Mol einer tetrafunktionellen Komponente um; und so fort.

Man kann die Komponenten aber auch in nicht-stöchiometrischem Molverhältnis umsetzen. Dann entstehen Produkte, die noch freie sekundäre Aminogruppen der Formel II haben oder freie Epoxid- oder Halogenidgruppen besitzen. Beispiele hierfür sind die Umsetzung einer Verbindung der Formel I, die nur eine Gruppe der Formel II enthält, mit einem Triepoxid vom Molverhältnis 2 : 1 oder die Umsetzung einer Komponente I, die 4 Gruppen der Formel II enthält, mit einem Dihalogenid im Molverhältnis 1 : 1.

Da die Verbindung der Formel I mehr als 10 Gruppen der Formel II haben kann und man diese erfindungsgemäß mit di-, tri- oder tetrafunktionellen Reaktionspartnern umsetzt, hat man durch entsprechende Wahl der Komponenten und deren Molverhältnis die Möglichkeit, Produkte der verschiedensten Strukturen und Eigenschaften zu erhalten. Man kann Produkte mit mittlerem oder hohem Molekulargewicht erhalten, Produkte mit linearer oder verzweigter Struktur, Produkte mit größer oder kleinerer Löslichkeit und mit höherer oder niedrigerer Erweichungstemperatur. Oft erhält man auch Produktgemische, vor allem bei nicht-stöchiometrischer Umsetzung.

Alle erfindungsgemäß entstehenden Reaktionsprodukte oder Produkt-Gemische haben eine hervorragende Wirkung als Stabilisatoren, insbesondere als Lichtschutzmittel für Polymere. Beispiele für Polymere, die durch Lichteinwirkung normalerweise geschädigt werden und durch den Zusatz der erfindungsgemäßen Reaktionsprodukte stabilisiert werden können, sind:

1. Polymere von Mono- und Diolefinen, beispielsweise Polyäthylen (das gegebenenfalls vernetzt sein kann), Polypropylen, Polyisobutylen, Polymethylbuten-1, Polymethylpenten-1, Polyisopren oder Polybutadien.
2. Mischungen der unter 1) genannten Polymeren, z. B. Mischungen von Polypropylen mit Polyäthylen oder mit Polyisobutylen.
3. Copolymere von Mono- und Diolefinen, wie z. B. Äthylen-Propylen-Copolymere, Propylen-Buten-1-Copolymere, Propylen-Isobutylen-Copolymere, Äthylen-Buten-1-Copolymere sowie Terpolymere von Äthylen mit Propylen und einem Dien, wie Hexadien, Dicyclopentadien oder Äthylidennorbonen.
4. Polystyrol.
5. Copolymere von Styrol oder α-Methylstyrol mit Dienen oder Acrylderivaten, wie z. B. Styrol-Butadien, Styrol-Acrylnitril, Styrol-Acrylnitril-Methylacrylat; Mischungen von hoher Schlagzähigkeit aus Styrol-Copolymeren und einem anderen Polymer wie z. B. einem Polyacrylat, einem Dien-Polymeren oder einem Äthylen-Propylen-Dien-Terpolymeren; sowie Block-Copolymere des Styrols, wie z. B. Styrol-Butadien-Styrol, Styrol-Isopren-Styrol oder Styrol-Äthylen/Butylen-Styrol.
6. Graft- oder Pfropfcopolymere von Styrol, wie z. B. Styrol auf Polybutadien, Styrol und Acrylnitril auf Polybutadien sowie deren Mischungen mit den unter 5) genannten Copolymeren, wie sie als sogenannte ABS-Polymere bekannt sind.
7. Halogenhaltige Polymere, wie z. B. Polyvinylchlorid, Polyvinylidenchlorid, Polyvinylfluorid, Polychloropren, Chlorkautschuke und Copolymere wie Vinylchlorid-Vinylendenchlorid, Vinylchlorid-Vinylacetat oder Vinylidenchlorid-Vinylacetat.
8. Polymere, die sich von α,β-ungesättigten Säuren udn deren Derivaten ableiten, wie Polyacrylate und Polymethacrylate, Polyacrylamide und Polyacrylnitril.
9. Polymere, die sich von ungesättigten Alkokholen und Aminen bzw. deren Acrylderivaten oder Acetalen ableiten, wie Polyvinylalkohol, Polyvinylacetat-, -stearat, -benzoat, -maleat, Polyvinylbutyral, Polyallalylphthalat, Polyallylmelamin und deren Copolymere mit anderen Vinylverbindungen, wie Äthylen/Vinylacetat-Copolymere.
10. Homo- und Copolymere von Epoxyden, wie Polyäthylenoxyd, Polypropylenoxyd oder deren Copolymere mit Bisgycidyläthern.
11. Polyacetale, wie Polyoxymethylen, sowie solche Polyoxymethylene, die als Comonomeres Äthylenoxyd enthalten.
12. Polyphenylenoxyde.
13. Polyurethane und Polyharnstoffe,

14. Polycarbonate.
15. Polysulfone.
16. Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12.
17. Polyester, die sich von Dicarbonsäuren und Dialkoholen und/oder von Hydroxycarbonsäuren oder den entsprechenden Lactonen ableiten, wie Polyäthylenterepthalat, Polybutylenterephthalat, Poly-1,4-dimethylolcyclohexanterephthalat, sowie Block-Polyäther-ester, die sich von Polyäthern mit Hydroxylendgruppen und Dicarbonsäuren ableiten.
18. Vernetzte Polymerisate, die sich von Aldehyden einerseits und Phenolen, Harnstoffen und Melaminen andererseits ableiten, wie Phenol-Formaldehyd-, Harnstoff-Formaldehyd- und Melamin-Formaldehydharze.
19. Alkydharze, wie Glycerin-Phthalsäure-Harze und deren Gemische mit Melamin-Formaldehydharzen.
20. Ungesättigte Polyesterharze, die sich von Copolyestern gesättigter- und ungesättigter Dicarbonsäuren mit mehrwertigen Alkoholen, sowie Vinylverbindungen als Vernetzungsmitteln ableiten, wie auch deren halogenhaltige, schwerbrennbare Modifikationen.
21. Vernetzte Epoxidharze, die sich von Polyepoxiden ableiten, z. B. von Bis-glycidyläthern oder von cycloaliphatischen Diepoxiden.
22. Natürliche Polymere, wie Cellulose, Gummi, sowie deren polymerhomolog chemisch abgewandelte Derivate, wie Celluloseacetate, -propionate und -butyrate, bzw. die Celluloseäther, wie Methylcellulose.

Von diesen Polymeren sind die Gruppen 1 – 7, 13, 16 und 17 hervorzuheben, da in diesen Substraten die erfindungsgemäßen Stabilisatoren eine besonders markante Wirkung haben. Außerdem sind Polymere, die als Lackharze verwendet werden, von besonderer Bedeutung.

Die erfindungsgemäßen Reaktionsprodukte werden den Substraten in einer Konzentration von 0,005 bis 5 Gew.-%, berechnet auf das zu stabilisierende Material, einverleibt. Vorzugsweise werden 0,01 bis 1,0, besonders bevorzugt 0,02 bis 0,5 Gew.-% der Stabilisatoren, berechnet auf das zu stabilisierende Material, in dieses eingearbeitet. Die Einarbeitung kann beispielsweise durch Einmischen mindestens eines der erfindungsgemäßen Lichtschutzmittel und gegebenenfalls weiterer Additive nach den in der Technik üblichen Methoden, vor oder während der Formgebung erfolgen.

Der so stabilisierte Kunststoff kann außerdem noch andere Stabilisatoren oder sonstige in der Kunststofftechnologie übliche Zusätze enthalten, wie sie beispielsweise in der DE-OS 2 349 962, Seite 25 – 23, aufgeführt sind.

Bei der Mitverwendung bekannter Stabilisatoren können synergistische Effekte auftreten, was besonders bei Mitverwendung von anderen Lichtschutzmitteln oder von organischen Phosphiten häufig der Fall ist.

Von besonderer Bedeutung ist die Mitverwendung von Antioxydantien bei der Stabilisierung von Polyolefinen.

Die Erfindung betrifft daher auch die durch Zusatz von 0,01 bis 5 Gew.-% eines erfindungsgemäßen Reaktionsproduktes stabilisierten Kunststoffe, die gegebenenfalls noch andere bekannte und übliche Zusätze enthalten können. Die so stabilisierten Kunststoffe können in verschiedenster Form angewendet werden, z. B. als Folien, Fasern, Bändchen, Profile oder als Bindemittel für Lacke, Klebemittel oder Kitte.

Die Herstellung und Verwendung der erfindungsgemäßen Verbindungen wird in den folgenden Beispielen näher beschrieben. Teile bedeuten darin Gewichtsteile und % Gewichtsprozente. Die Temperaturen sind in Celsius-Graden angegeben.

Beispiel 1

Umsetzung von

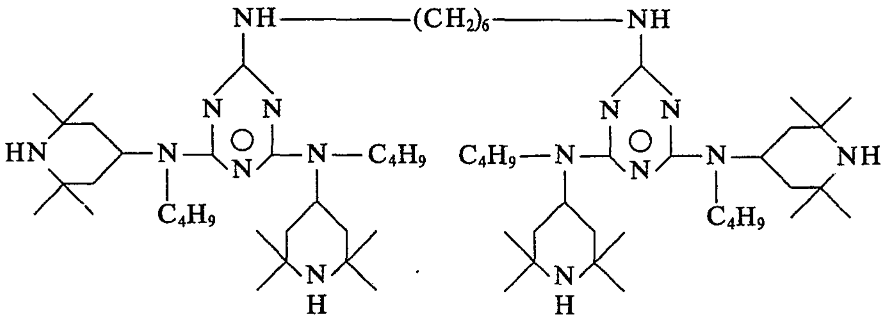

mit

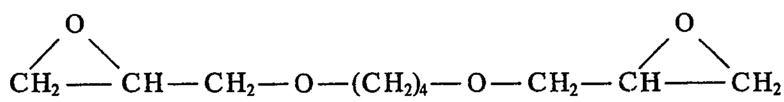

a) Molverhältnis 1 : 1

44,6 g N,N'-Bis[2,4-bis(2,2,6,6-tetramethylpiperidinyl-4-butylamino)-1,3,5-triazin-6-yl]hexamethylendiamin und 8,0 g 1,4-Butandiol-diglycidyläther werden in 100 ml Äthylenglykolmonobutyläther 10 Stunden unter Stickstoff bei 160° gerührt. Nach dem Eindampfen des Lösungsmittels, zuletzt am Hochvakuum (0,001 Torr) bei 150°, erhält man ein bräunliches Harz, das zu einem schwach beigen Pulver mit Sinterpunkt ca. 93° zerkleinert werden kann. Das Produkt hat ein mittleres Molekulargewicht von 3200.

b) Molverhältnis 2 : 1

Verwendet man anstelle von 8,0 g 1,4-Butandioldiglycidyläther nur 4,0 g dieser Verbindung und verfährt man im übrigen genau wie oben beschrieben, so erhält man ein fast farbloses Pulver, das bei ca. 82° schmilzt.

Beispiel 2

Umsetzung von

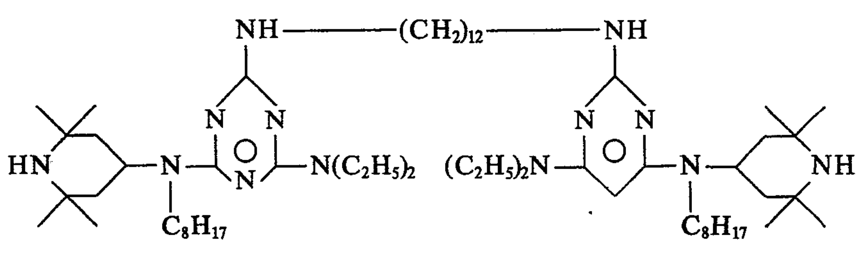

mit

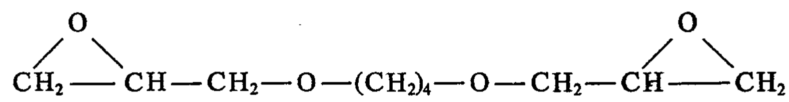

im Molverhältnis 1 : 1

41,3 g N,N'-Bis[2-diäthylamino-4-(2,2,6,6-tetramethylpiperidinyl-4-octylamino)-1,3,5-triazin-6-yl]dodecamethylendiamin und 8,8 g 1,4-Butandiol-diglycidyläther werden in 150 ml Äthylenglykol 10

Stunden unter Stickstoff bei 170° gerührt. Nach dem Abkühlen auf ca. 150°, werden 300 ml Toluol zugegeben, und die Lösung wird mit je 200 ml Wasser gewaschen. Nach dem Eindampfen des Toluols wird der Rückstand 12 Stunden im Hochvakuum (0,001 Torr) bei 150° getrocknet. Das erhaltene Additionsprodukt ist ein bräunliches, zähflüssiges Harz mit einem mittleren Molekulargewicht von 2800.

## Beispiel 3

Umsetzung von

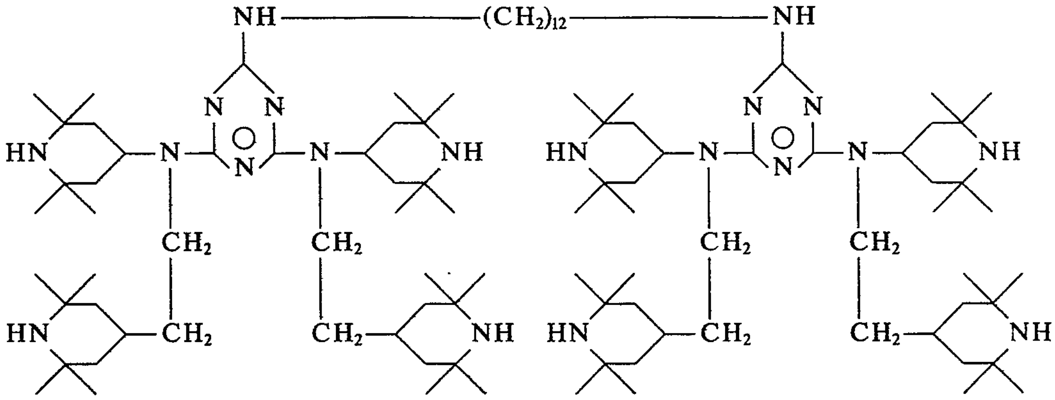

mit

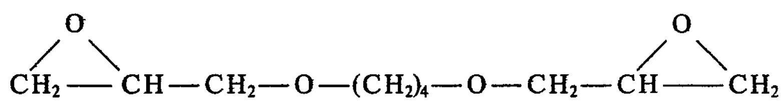

im Molverhältnis 1 : 1

36,9 g Cyanurchlorid werden in 250 ml Aceton gelöst und die Lösung auf 5° abgekühlt. Zu dieser Lösung tropft man bei 5–10° in ca. 2 Stunden eine Lösung von 129,4 g 2,2,6,6-Tetramethyl-4-[2-(2,2,6,6-tetramethylpiperidyl-4')-aminoäthyl]-piperidin in 500 ml Wasser und läßt 30 Minuten nachreagieren. Dann tropft man in ca. 5 Minuten eine Lösung von 8,0 g Natriumhydroxid in 50 ml Wasser hinzu und rührt weitere 2 Stunden bei 35–40°. Man tropft erneut eine Lösung von 8,0 g Natriumhydroxid in 50 ml Wasser hinzu und rührt anschließend 6 Stunden bei 45–50°. Der Farblose Niederschlag von 2-Chlor-4,6-bis-[2,2,6,6-tetramethyl-4-piperidyl-2-(2,2,6,6-tetramethylpiperidyl-4)-äthylamino-1,3,5-triazin wird abfiltriert, mit Wasser gewaschen, getrocknet und aus Acetonitril umkristallisiert (Smp. 142°).

75,8 g 2-Chlor-4,6-bis-[2,2,6,6-tetramethyl-4-piperidyl-2-(2,2,6,6-tetramethylpiperidyl-4)-äthylamino]-1,3,5-triazin werden mit 10,0 g 1,12-Diaminododecan in 200 ml Xylol 12 Stunden am Rückfluß gekocht. Nach der Zugabe von 4,0 g fein pulverisiertes Natriumhydroxid wird weitere 24 Stunden am Rückfluß gerührt. Nach dem Abkühlen auf Raumtemperatur wird 100 ml Wasser zugesetzt, kräftig gerührt, die organische Phase abgetrennt und dreimal mit je 100 ml Wasser gewaschen. Die Xylollösung wird über Natriumsulfat getrocknet und eingedampft. Man erhält das N,N'-Bis-{2,4-bis-[2,2,6,6-tetramethyl-4-piperidyl-2-(2,2,6,6-tetramethylpiperidyl-4)äthylamino]-1,3,5-triazin-6-yl}dodecamethylendiamin vom Smp. 92°.

32,8 g dieser Verbindung werden mit 4,0 g 1,4-Butandioldiglycidyläther in 100 ml Äthylenglykolmonobutyläther 15 Stunden unter Stickstoff bei 160° gerührt. Das Reaktionsgemisch wird langsam in 500 ml Eiswasser gegossen, der entstandene Niederschlag abfiltriert, mit Wasser gewaschen und im Hochvakuum bei 50° getrocknet. Man erhält das Polyadditionsprodukt als fast farbloses Pulver mit einem mittleren Molekulargewicht von 4600 und einem Sinterpunkt von ca. 70°.

## Beispiel 4

Stabilisierung von Polypropylen gegen Lichtabbau

100 Teile Polypropylenpulver (Moplen, Fibre grade, der Firma Montedison) werden mit 0,2 Teilen β-(3,5-Di-tert.-butyl-4-hydroxyphenyl)-propionsäure-octadecylester und 0,25 Teilen eines Stabilisators

der folgenden Tabelle 1 im Brabender-Plastographen bei 200° C während 10 Minuten homogenisiert. Die so erhaltene Masse wird möglichst rasch dem Kneter entnommen und in einer Kniehebelpresse zu einer 2 – 3 mm dicken Platte gepreßt, Ein Teil des erhaltenen Rohpreßlings wird ausgeschnitten und zwischen zwei Hochglanz-Hartaluminiumfolien mit einer Handhydraulischen Laborpresse während 6 Minuten bei 260° zu einer 0,1 mm dicken Folie gepreßt, die unverzüglich in kaltem Wasser abgeschreckt wird. Aus dieser werden nun Abschnitte ausgestanzt und im Xenotest 1200 belichtet. Zu regelmäßigen Zeitabständen werden diese Prüflinge aus dem Belichtungsapparat entnommen und in einem IR-Spektrophotometer auf ihren Carbonylgehalt geprüft. Die Zunahme der Carbonylextinktion bei 5,85 $\mu$ während der Belichtung ist ein Maß für den photoxidativen Abbau des Polymeren (s. L. Balaban et al., J. Polymer Sci., Part C, 22, 1059 – 1071, 1969) und ist erfahrungsgemäß mit einem Abfall der mechanischen Eigenschaften des Polymeren verbunden. Als Maß der Schutzwirkung gilt die Zeit bis Erreichen einer Carbonylextinktion von ca. 0,3, bei welcher die Vergleichsfolie brüchig ist.

Die Schutzwirkung der Stabilisatoren gemäß Erfindung ist aus folgender Tabelle 1 ersichtlich:

Tabelle 1

| Lichtschutzmittel gemäß Beispiel No. | Zeit bis Carbonylextinktion von 0,3 erreicht ist |
|---|---|
| 1 a | 4000 h |
| 1 b | 5500 h |
| 2 | 3800 h |
| ohne Lichtschutzmittel | 710 h |

Beispiel 5

Lichtschutzwirkung in PP-Fasern

1000 Teile unstabilisiertes Polypropylenpulver (Schmelzindex ~18) werden in einem Trommelmischer mit 1 Teil Pentaerithrytyl-tetrakis[3.5-di-tert.-butyl-4-hydroxyphenyl)-propionat] und mit 3 Teilen der in der Tabelle angeführten Lichtschutzmittel gemischt und anschließend in einem Extruder bei 220°C extrudiert und granuliert. Das erhaltene Granulat wird in einer Labor-Schmelzspinnanlage bei einer maximalen Temperatur von 270°C und einer Geschwindigkeit von 300 m/Minuten zu einem 730/37 denier Multifilament versponnen. Dieses wird verstreckt und gezwirnt mittels einer Streckzwirnmaschine. Das Streckverhältnis ist 1 : 5,6 und die Zwirnzahl 15/Meter, so daß schließlich Multifilamente 130/37 denier erhalten werden. Diese Multifilamente werden auf weißen Karton montiert und im Xenotest 1200 belichtet.

Als Maß der Schutzwirkung gilt die Belichtungszeit bis 50% Reißfestigkeitsverlust.

Tabelle 2

| Lichtschutzmittel gemäß Beispiel No. | Belichtungszeit bis 50% Reißfestigkeitsverlust |
|---|---|
| 1 a | 4500 h |
| 1 b | 3000 h |
| ohne Lichtschutzmittel | 500 h |

**Patentansprüche**

1. Verfahren zur Herstellung von neuen Stabilisatoren für Polymere, dadurch gekennzeichnet, daß man eine Verbindung der Formel I,

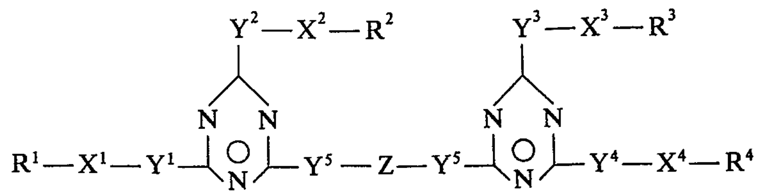

(I)

worin $X^1$, $X^2$, $X^3$ und $X^4$ eine direkte Bindung, $C_1-C_4$-Alkylen oder $-OCH_2CH_2CH_2-$, dessen O nicht an $Y^1$, $Y^2$, $Y^3$ oder $Y^4$ gebunden ist, bedeuten, $Y^1$, $Y^2$, $Y^3$, $Y^4$ und $Y^5$ $-O-$, $-S-$ oder $-NR^5-$ bedeuten, Z $C_2-C_{12}$-Alkylen, durch $-O-$, $-S-$ oder $-NR^6-$ unterbrochenes $C_4-C_{12}$-Alkylen, Xylylen, $C_6-C_{12}$-Arylen oder $-$Phenylen-E-Phenylen$-$ bedeutet, wobei E $-CH_2-$, $>C(CH_3)_2$, $-SO_2-$ oder $-O-$ darstellt, und mindestens einer der Reste $R^1$, $R^2$, $R^3$, $R^4$, $R^5$ und $R^6$ eine Polyalkylpiperidylgruppe der Formel II darstellt,

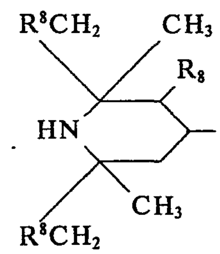

(II)

und die übrigen Reste $R^1$, $R^2$, $R^3$, $R^4$, $R^5$ und $R^6$ Wasserstoff, $C_1-C_{18}$-Alkyl, $C_2-C_8$-Alkoxyalkyl, $C_2-C_4$-Hydroxyalkyl, $C_5-C_{12}$-Cycloalkyl, $C_7-C_{18}$-Alkenyl, $C_6-C_{10}$-Aryl, durch 1 oder 2 $C_1-C_8$-Alkylgruppen und/oder $C_1-C_4$-Alkoxygruppen und/oder OH substituiertes Phenyl oder eine Polyalkylpiperidylgruppe der Formel II' darstellt,

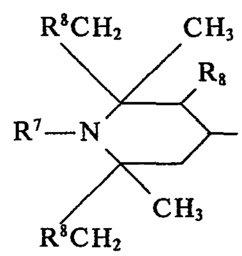

(II')

oder im Falle, daß $Y^1$, $Y^2$, $Y^3$ oder $Y^4$ $-NR^5-$ bedeutet und $X^1$, $X^2$, $X^3$ oder $X^4$ eine direkte Bindung ist, $R^1$, $R^2$, $R^3$ oder $R^4$ zusammen mit $R^5$ und dem N-Atom einen Pyrrolidin-, Piperidin- oder Morpholinring bilden, $R^7$ O˙, $C_1-C_{12}$-Alkyl, Allyl oder Benzyl bedeutet und $R^8$ Wasserstoff oder Methyl bedeutet, entweder mit einer Dihalogenverbindung der Formel Hal$-$A$-$Hal, worin Hal Cl oder Br bedeutet und A $C_2-C_{12}$-Alkylen, $C_4-C_8$-Alkenylen, Xylylen oder einen Rest der Formel

$-CH_2-C\equiv C-CH_2-$ 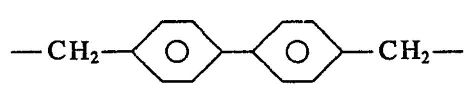

oder

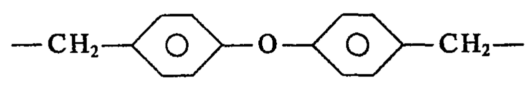

bedeutet umsetzt oder mit einem Diepoxid der Formel III,

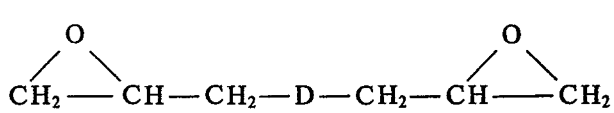

(III)

worin D einen zweiwertigen Rest der Formel

$$-O-R^9-O-,\quad -O-C(O)-R^{10}-C(O)-O-,$$

$$-OCH(R^{11})CH_2O-R^9-OCH_2CH(R^{11})O-$$

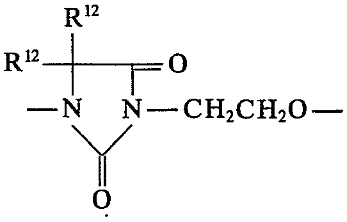

oder

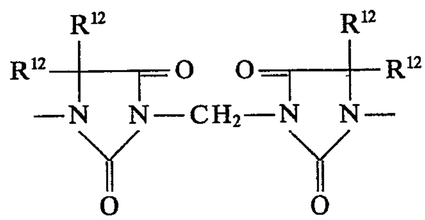

darstellt, worin
$R^9$ $C_2-C_{12}$ Alkylen, $C_6-C_{12}$ Cycloalkylen, $C_6-C_{12}$ Arylen oder —Phenylen-E-Phenylen— darstellt, $R^{10}$ eine direkte Bindung, $C_1-C_{12}$ Alkylen, $C_2-C_6$ Alkenylen, $C_6-C_{12}$ Cycloalkylen oder Cycloalkenylen oder $C_6-C_{12}$ Arylen darstellt und $R^{11}$ und $R^{12}$ Wasserstoff oder $C_1-C_4$ Alkyl sind, oder mit Epichlorhydrin umsetzt,
oder mit einem Triepoxid der Formel IV umsetzt,

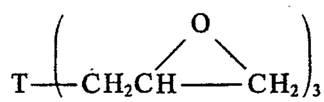

(IV)

worin T einen dreiwertigen Rest der Formeln

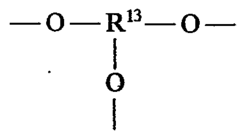

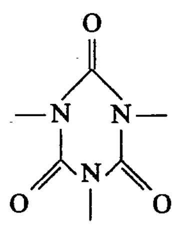

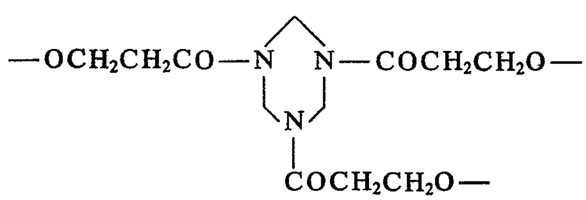

oder

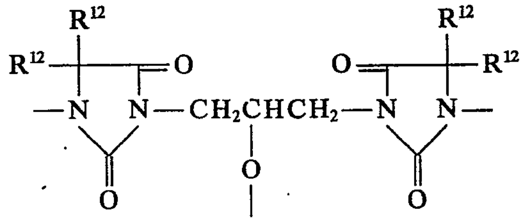

darstellt und
$R^{13}$ ein dreiwertiger aliphatischer Kohlenwasserstoffrest mit 3–10 C-Atomen ist,

oder mit einem Tetra-epoxid der Formel V umsetzt,

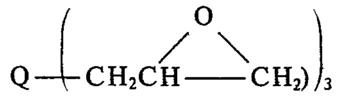 (V)

worin Q einen vierwertigen Rest der Formel

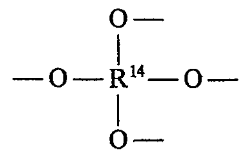

oder

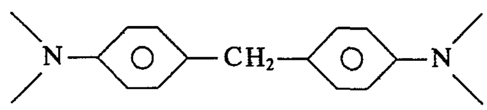

darstellt und
$R^{14}$ einen vierwertigen aliphatischen Kohlenwasserstoffrest mit 4 – 10 C-Atomen bedeutet.

2. Verfahren gemäß Anspruch 1, dadurch gekennzeichnet, daß man zur Umsetzung eine Verbindung der Formel I verwendet, in deren Polyalkylpiperidingruppen der Formel II und II' der Substituent $R^8$ Wasserstoff ist.

3. Verfahren gemäß Anspruch 1, dadurch gekennzeichnet, daß man zur Umsetzung eine Verbindung der Formel I verwendet, worin $Y^1$, $Y^2$, $Y^3$, $Y^4$ und $Y^5$ $-NR^5-$ bedeuten und Z Alkylen ist.

4. Verfahren gemäß Anspruch 1, dadurch gekennzeichnet, daß man die Umsetzung bei 100° bis 200° C durchführt.

5. Verfahren gemäß Anspruch 1, dadurch gekennzeichnet, daß man die Umsetzung in einem über 100° C siedenden Lösungsmittel durchführt.

6. Die nach dem Verfahren des Anspruch 1 erhältlichen Produkte.

7. Verwendung der gemäß Anspruch 1 erhältlichen Produkte als Stabilisatoren für Polymere.

8. Verwendung gemäß Anspruch 7 als Stabilisatoren für Polyolefine, Polystyrol und Stroy-Copolymere, Polyurethane, Polyamide und Polyester.

9. Verwendung gemäß Anspruch 7 als Stabilisatoren für Lackharze.

10. Gegen Lichtabbau stabilisierte Polymere, enthaltend 0,005 bis 5 Gew.-% eines gemäß Anspruch 1 erhältlichen Produktes.

## Claims

1. A process for the manufacture of novel stabilisers for polymers, characterised in that a compound of the formula I

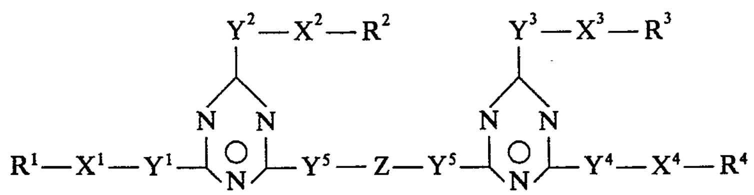 (I)

wherein $X^1$, $X^2$, $X^3$ and $X^4$ are a direct bond, $C_1-C_4$alkylene or $-OCH_2CH_2CH_2-$, in which the O is not attached to $Y^1$, $Y^2$, $Y^3$ or $Y^4$, and $Y^1$, $Y^2$, $Y^3$, $Y^4$ and $Y^5$ are $-O-$, $-S-$ or $-NR^5-$, Z is $C_2-C_{12}$alkylene, $C_4-C_{12}$alkylene which is interrupted by $-O-$, $-S-$ or $-NR^6-$, xylylene, $C_6-C_{12}$arylene or $-$phenylene-E-phenylene$-$, in which E is $-CH_2-$, $>C(CH_3)_2$, $-SO_2-$ or $-O-$, and at least one of

$R^1$, $R^2$, $R^3$, $R^4$, $R^5$ and $R^6$ is a polyalkylpiperidyl group of the formula II

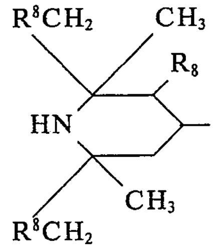

(II)

and the others are hydrogen, $C_1-C_{18}$alkyl, $C_2-C_8$alkoxyalkyl, $C_2-C_4$hydroxyalkyl, $C_5-C_{12}$cycloalkyl, $C_7-C_{12}$aralkyl, $C_3-C_{18}$alkenyl, $C_6-C_{10}$aryl, phenyl which is substituted by 1 or 2 $C_1-C_8$alkyl groups and/or $C_1-C_4$alkoxy groups and/or OH, or is a polyalkylpiperidyl group of the formula II'

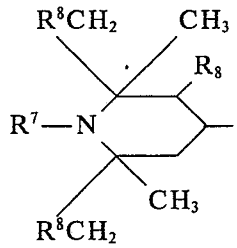

(II')

or, if $Y^1$, $Y^2$, $Y^3$ or $Y^4$ is $-NR^5-$ and $X^1$, $X^2$, $X^3$or $X^4$ is a direct bond, $R^1$, $R^2$, $R^3$ or $R^4$ together with $R^5$ and the nitrogen atom to which they are attached form a pyrrolidine, piperidine or morpholine ring, $R^7$ is O˙, $C_1-C_{12}$alkyl, allyl or benzyl, and $R^8$ is hydrogen or methyl, is reacted either with a dihalogen compound of the formula Hal−A−Hal, wherein Hal is Cl or Br and A is $C_2-C_{12}$alkylene, $C_4-C_8$alkenylene, xylylene or a radical of the formula

$$-CH_2-C\equiv C-CH_2-$$

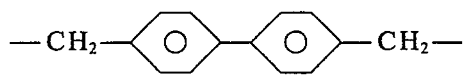

or

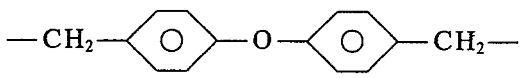

or with a diepoxide of the formula III

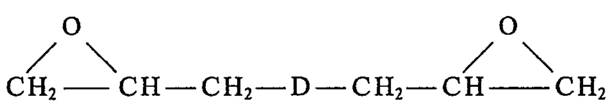

(III)

wherein D is a divalent radical of the formula

$$-O-R^9-O-,\quad -O-C(O)-R^{10}-C(O)-O-,$$

$$-OCH(R^{11})CH_2O-R^9-OCH_2CH(R^{11})O-$$

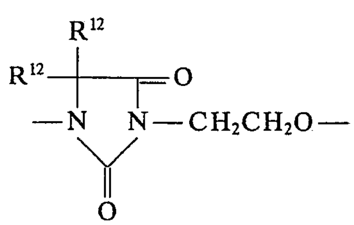

or

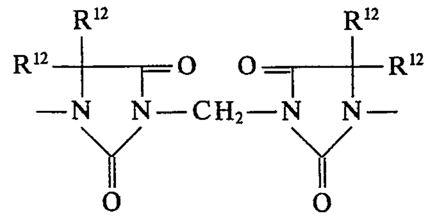

wherein $R^9$ is $C_2-C_{12}$alkylene, $C_6-C_{12}$cycloalkylene, $C_6-C_{12}$arylene or −phenylene-E-phenylene−, $R^{10}$ is a direct bond, $C_1-C_{12}$alkylene, $C_2-C_6$alkenylene, $C_6-C_{12}$cycloalkylene or cycloalkenylene or $C_6-C_{12}$arylene, and $R^{11}$ and $R^{12}$ are hydrogen or $C_1-C_4$alkyl, or with epichlorohydrin or with a triepoxide of the formula IV

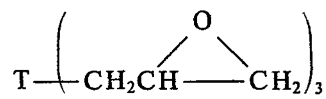

(IV)

wherein T is a trivalent radical of the formula

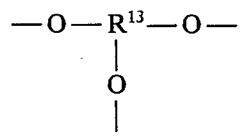

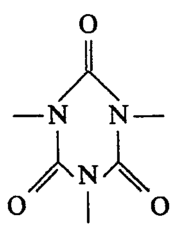

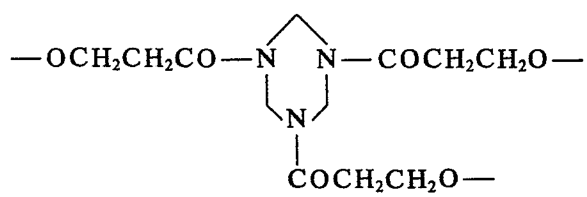

or

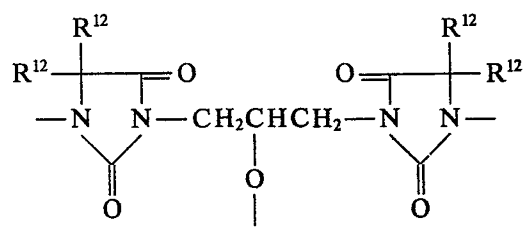

and $R^{13}$ is a trivalent aliphatic hydrocarbon radical containing 3 to 10 carbon atoms, or with a tetraepoxide of the formula V

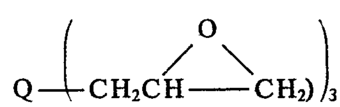

(V)

wherein Q is a quadrivalent radical of the formula

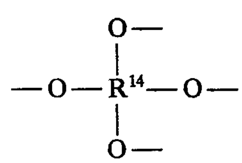

or

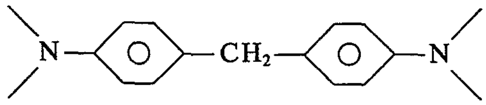

and $R^{14}$ is a quadrivalent aliphatic hydrocarbon radical containing 4 to 10 carbon atoms.

2. A process according to claim 1, characterised in that there is used for the reaction a compound of the formula I in whose polyalkylpiperidine groups of the formulae II and II′ the substituent $R^8$ is hydrogen.

3. A process according to claim 1, wherein there is used for the reaction a compound of the formula I, wherein $Y^1$, $Y^2$, $Y^3$, $Y^4$ and $Y^5$ are $-NR^5-$ and Z is alkylene.

4. A process according to claim 1, characterised in that the reaction is carried out in the temperature range from 100° to 200° C.

5. A process according to claim 1, characterised in that the reaction is carried out in a solvent which boils above 100° C.

6. The products obtained by the process of claim 1.

7. Use of the products obtained according to claim 1 as stabilisers for polymers.

8. Use according to claim 7 as stabilisers for polyolefins, polystyrene and styrene copolymers, polyurethanes, polyamides and polyesters.

9. Use according to claim 7 as stabilisers for surface-coating resins.

10. Polymers stabilised against light-induced degradation, which contain 0.005 to 5% by weight of a product obtainable according to claim 1.

**Revendications**

1. Procédé de préparation de nouveaux stabilisants pour polymères, procédé caractérisé en ce qu'on fait réagir un composé répondant à la formule I:

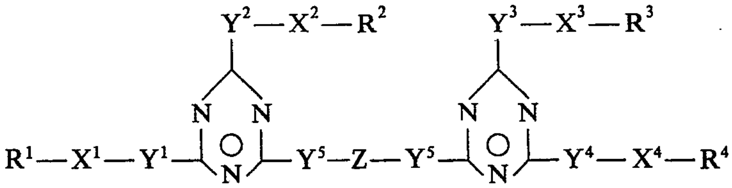

(I)

dans laquelle $X^1$, $X^2$, $X^3$ et $X^4$ représentent une liaison directe, un alkylène en $C_1-C_4$ ou $-OCH_2CH_2CH_2-$ dont l'atome d'oxygène n'est pas lié à $Y^1$, $Y^2$, $Y^3$ ou $Y^4$, $Y^1$, $Y^2$, $Y^3$, $Y^4$ et $Y^5$ représentent $-O-$, $-S-$ ou $-NR^5-$, Z représente un alkylène en $C_2-C_{12}$, un alkylène en $C_4-C_{12}$ interrompu par $-O-$, $-S-$ ou $-NR^6-$, un xylylène, un arylène en $C_6-C_{12}$ ou un $-$phénylène-E-phénylène$-$ dont le pont E est $-CH_2-$, $>C(CH_3)_2$, $-SO_2-$ ou $-O-$, et au moins l'un des radicaux $R^1$, $R^2$, $R^3$, $R^4$, $R^5$ et $R^6$ représente un radical polyalkyl-pipéridyle de formule II:

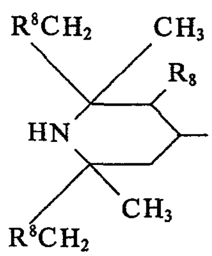

(II)

et les autres radicaux $R^1$, $R^2$, $R^3$, $R^4$, $R^5$ et $R^6$ représentent l'hydrogène, un alkyle en $C_1-C_{18}$, un alcoxy-alkyle en $C_2-C_8$, un hydroxy-alkyle en $C_2-C_4$, un cyclo-alkyle en $C_5-C_{12}$, un aralkyle en $C_7-C_{12}$, un alcényle en $C_3-C_{18}$, un aryle en $C_6-C_{10}$, un phényle porteur d'un ou deux radicaux alkyles en $C_1-C_8$

et/ou radicaux alcoxy en $C_1-C_4$ et/ou $-OH$, ou un radical polyalkyl-pipéridyle de formule II'

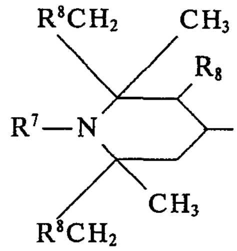

(II')

ou, dans le cas où $Y^1$, $Y^2$, $Y^3$ ou $Y^4$ représente $-NR^5-$ et $X^1$, $X^2$, $X^3$ ou $X^4$ une liaison directe, $R^1$, $R^2$, $R^3$ ou $R^4$ forme avec $R^5$ et l'atome d'azote un noyau de pyrrolidine, de pipéridine ou de morpholine, $R^7$ représente $O^{\cdot}$, un alkyle en $C_1-C_{12}$, un allyle ou un benzyle et $R^8$ représente l'hydrogène ou un méthyle, soit avec un composé dihalogéné de formule Hal–A–Hal dans lequel Hal représente Cl ou Br et A un alkylène en $C_2-C_{12}$, un alcénylène en $C_4-C_8$, un xylylène ou un radical de formule:

$-CH_2-C\equiv C-CH_2-$ 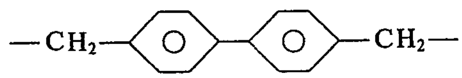

ou

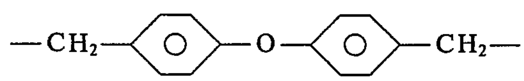

soit avec un di-époxyde répondant à la formule III:

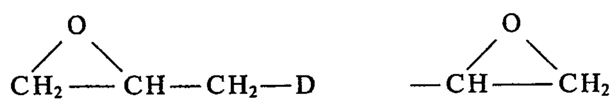

(III)

dans laquelle D représente un radical bivalent répondant à l'une des formules

$$-O-R^9-O-,\quad -O-C(O)-R^{10}-C(O)-O-,$$

$$-OCH(R^{11})CH_2O-R^9-OCH_2CH(R^{11})O-$$

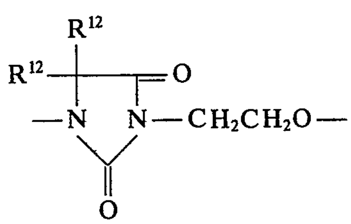

et

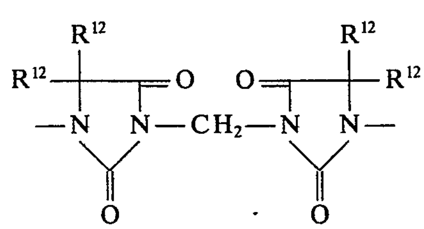

dans lesquelles $R^9$ représente un alkylène en $C_2-C_{12}$, un cyclo-alkylène en $C_6-C_{12}$, un arylène en $C_6-C_{12}$ ou un –phénylène-E-phénylène–, $R^{10}$ une liaison directe, un alkylène en $C_1-C_{12}$, un alcénylène en $C_2-C_6$, un cyclo-alkylène ou cyclo-alcénylène en $C_6-C_{12}$ ou un arylène en $C_6-C_{12}$ et $R^{11}$ et $R^{12}$ représentent l'hydrogène ou un alkyle en $C_1-C_4$, soit avec l'épichlorhydrine, soit avec un

tri-époxyde répondant à la formule IV:

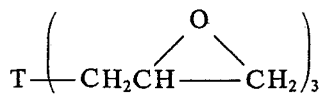

(IV)

dans laquelle T représente un radical trivalent répondant à l'une des formules:

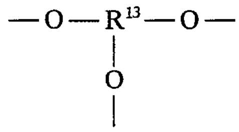

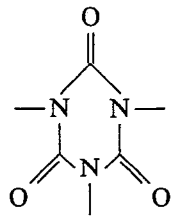

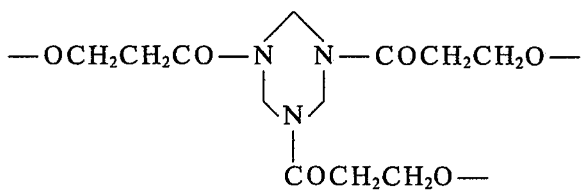

et

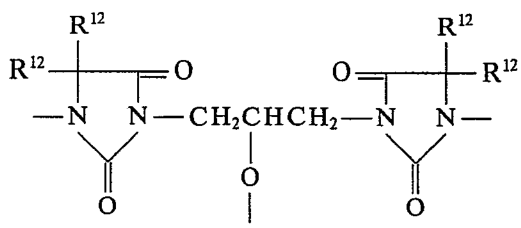

où $R^{13}$ désigne un radical hydrocarboné aliphatique trivalent contenant de 3 à 10 atomes de carbone, soit avec un tétra-époxyde répondant à la formule V:

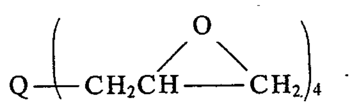

(V)

dans laquelle Q représente un radical quadrivalent répondant à l'une des formules:

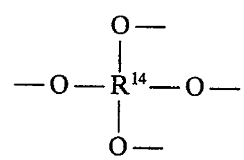

et

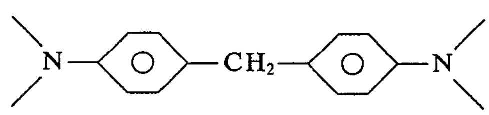

où $R^{14}$ représente un radical hydrocarboné aliphatique quadrivalent contenant de 4 à 10 atomes de carbone.

2. Procédé selon la revendication 1 caractérisé en ce qu'on utilise pour la réaction un composé de formule I dans les groupes polyalkyl-pipéridyles (II) et (II') duquel le substituant $R^8$ est l'hydrogène.

3. Procédé selon la revendication 1 caractérisé en ce qu'on utilise pour la réaction un composé de formule I dans lequel $Y^1$, $Y^2$, $Y^3$, $Y^4$ et $Y^5$ représentent $-NR^5-$ et Z est un alkylène.

4. Procédé selon la revendication 1 caractérisé en ce qu'on effectue la réaction à une température de 100 à 200°C.

5. Procédé selon la revendication 1 caractérisé en ce qu'on effectue la réaction dans un solvant bouillant au-dessus de 100°C.

6. Produits obtenus par le procédé de la revendication 1.

7. Utilisation des produits obtenus selon la revendication 1 comme stabilisants pour polymères.

8. Utilisation selon la revendication 7 comme stabilisants pour polyoléfines, polystyrène et copolymères du styrène, polyuréthannes, polyamides et polyesters.

9. Utilisation selon la revendication 7 comme stabilisants pour résines de peintures et vernis.

10. Polymères stabilisés contre la dégradation causée par la lumière, polymères qui contiennent de 0,005 à 5% en poids d'un produit obtenu selon la revendication 1.